(19) **Europäisches Patentamt European Patent Office Office européen des brevets**

(11) **EP 1 920 238 B1**

(12) **EUROPEAN PATENT SPECIFICATION**

(45) Date of publication and mention
of the grant of the patent:
**10.06.2009 Bulletin 2009/24**

(51) Int Cl.:
**G01N 21/64** *(2006.01)*

(21) Application number: **06784042.1**

(22) Date of filing: **01.09.2006**

(86) International application number:
**PCT/PL2006/000060**

(87) International publication number:
**WO 2007/027116 (08.03.2007 Gazette 2007/10)**

(54) **MEASUREMENT OF OXYGEN PARTIAL PRESSURE BASED ON ZIRCONIUM DIOXIDE LUMINESCENCE**

MESSUNG DES SAUERSTOFFPARTIALDRUCKS MITTELS ZIRKONDIOXID-LUMINESZENZ

MESURE DE LA PRESSION PARTIELLE D'OXYGÈNE À BASE DE LUMINESCENCE DE DIOXYDE DE ZIRCONIUM

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.09.2005 PL 37685605**

(43) Date of publication of application:
**14.05.2008 Bulletin 2008/20**

(73) Proprietor: **Instytut Wysokich Cisnien Polskiej Akademii Nauk 01-142 Warszawa (PL)**

(72) Inventors:
• **LOJKOWSKI, Witold**
  **02-972 Warszawa (PL)**
• **MILLERS, Donats**
  **1083 Riga (LV)**
• **FIDELUS, Janusz**
  **34-106 Mucharz (PL)**
• **GRIGORIEVA, Larisa**
  **1059 Riga (LV)**
• **OPALINSKA, Agnieszka**
  **96-300 Zyrardow (PL)**

• **NARKIEWICZ, Urszula**
  **70-710 Szczecin (PL)**
• **STREK, Wieslaw**
  **50-333 Wroclaw (PL)**

(74) Representative: **Adamczyk, Piotr**
**Kancelaria Patentowa Piotr Adamczyk**
**Ul. Wilcza 70/8**
**00-670 Warszawa (PL)**

(56) References cited:
**WO-A2-03/040727          US-B1- 6 815 211**

• **MURPHY C J: "Optical Sensing with Quantum Dots" ANALYTICAL CHEMISTRY, vol. 75, no. 19, 1 October 2002 (2002-10-01), pages 520A-526A, XP002410171**
• **DE LA ROSA-CRUZ E ET AL: "Luminescent properties and energy transfer in ZrO2:Sm3+ nanocrystals" JOURNAL OF APPLIED PHYSICS, AMERICAN INSTITUTE OF PHYSICS. NEW YORK, US, vol. 94, no. 5, 1 September 2003 (2003-09-01), pages 3509-3515, XP012060139 ISSN: 0021-8979**

EP 1 920 238 B1

**Description**

Technical Field

The invention relates to method of measuring of partial pressure of oxygen in gases by measuring the excited luminescence of the sensor, especially applicable in the measurements of the oxygen amount in exhaust gases of car engines as well as in the control of technological processes, control of the oxygen level in glasshouses, lecture rooms, conference rooms, restaurants and in the optimization of combustion processes as well as in-metallurgy.

Background Art

Solutions most closely related to the subject of the invention have been disclosed in patents US 6 815 211. The document discloses a method of measuring oxygen partial pressure in gases based on luminescence quenching a luminescent material such as a porphyrin dye, embedded in a polymeric membrane. In the document there is no suggestion to use any alternative luminescent sensor material.
In the paper "Optical Sensing with Quantum Dots" [by C.J. Murphy, Analytical Chemistry, 75(19), pages 520A-525A, 2002] has been described luminescence properties of CdSe quantum dots and suggested that "quantum dot photoluminescence can respond via changes in intensity to the presence of analytes". However in the paper $ZrO_2$ as a sensor material has not been mentioned as well as using of quantum dots for oxygen partial pressure sensing has not been suggested.
International publication No. WO 03/047027 A discloses the use of $ZrO_2$ nanoparticles as fluorescent emitters or markers but does not contain any hints teaching the skilled person toward using them for sensing oxygen partial pressure.
In paper "Luminescent properties and energy transfer in ZrO2:Sm3+ nanocrystals" [by De la Rosa-Cruz E. et al, Journal of Applied Physics, 94(5), pages 3509-3515, 2003] has been discussed the luminescence properties of $ZrO_2$: $Sm^{3+}$ nanocrystals but has not been disclosed any indication which would lead the skilled person towards using such nanocrystals for oxygen sensing.
In the patent application US 20010031224 A1 has been described an oxygen sensor from the zirconium oxide, in which the amount of oxygen is determined by the use of the ionic conductance.

Disclosure of Invention

The technical problem to be solved by the invention is replacing the known dye-containing membrane by another luminescent sensor material used for measuring the partial pressure of oxygen in gases using luminescence intensity as the measured signal. The problem has been solved by using nanocrystalline zirconium dioxide as the luminescent material.
In the method according to the invention the nanocrystalline zirconium dioxide in the calibrated sensor is brought into contact with a gas to be measured and is illuminated by a UV-VIS, light pulse which induces luminescence of the zirconium dioxide. Then the luminescence intensity is registered as a function of time, the luminescence intensity of the registered luminescence pulse is determined and compared with the calibration results of the luminescence intensity as a function of the oxygen partial pressure for the sensor temperature measured at a given time.
In the method determined luminescence intensity can equal the maximum of luminescence response pulse.
In one embodiment of the invention the sensor contains nanocrystalline zirconium dioxide with crystallites from 3 nm to 200 nm made of monoclinic phase, doped tetragonal phase, regular doped phase or a mixture of those phases.
In another embodiment of the invention the zirconia contains ions known to stabilise the monoclinic, tetragonal or regular phases or their mixtures or the zirconia contains ions of rare and transition metals, which improve the sensitivity of the sensor and decrease the operating temperature.
In another embodiment of the invention when the temperature of the measured gas is below 100°C, the sensor is heated to a temperature in the range of 100°C to 900°C and the sensor working temperature is proportional to the size of the nanocrystalline grains.
Wavelength of the used inducing excitation light impulse can be within the range from 210 nm to 620 nm.
In another embodiment of the invention the measuring of the sensor temperature at a given time is made on the basis of the exponent of the exponential function describing the luminescence decay as well as comparing the obtained value with the calibration results determining the connection between the temperature and this exponent.
In yet another embodiment measuring of the sensor temperature at a given time is made on the basis of the rate of decay of luminescence, which is characteristic for the give material used in the sensor.
For the purpose of the invention the determined luminescence intensity can also equal any fixed level of luminescence response pulse which is lover than maximum level.

The invention enables the simultaneous measurement of the oxygen amount in gases and the sensor temperature, thereby eliminating the necessity to stabilize the temperature and use of a temperature control device. The sensor working temperature can be regulated by the selection of the size of the nanocrystalline grains $ZrO_2$ and in case of the use of small zirconium oxide crystals the sensor can work in temperatures above 100°C. The invention enables the determination of the amount of oxygen in hot gases as well as the determination of temperature of those gases. Furthermore, the way of measurement in accordance with the invention, is characterized by clear algorithm and relatively simple measurement data handling. In case of the luminescent sensor $ZrO_2$ of the tetragonal phase, on account of low electric conduction, the heating element can be placed directly on $ZrO_2$ by the method of the thin film settlement. In the measurement method, the performance of only two measurements in one stimulated cycle, in order to determine the partial pressure of oxygen in gas and the sensor temperature, is required.

Brief Description of Drawings

The object of the invention has been schematically presented on the picture, where:

- Fig. 1 shows a scheme of the system for the measurement of oxygen level in gas atmosphere and the sensor temperature;
- Fig. 2 shows the possible order of operations and measurements in the time function;
- Fig 3a and Fig 3b present a type of correct value evaluation of the intensity amplitude of the luminescence ($I_0$), by the help of which one can determine the amount of oxygen in measured gas;
- Fig. 3c and Fig. 3d present a method of measurement, in which the designated amplitude value of the luminescence intensity ($I_{01}$) is overestimated due to the quicker turning on of another pulse in time ($t_2$), which corresponds with the luminescence intensity ($I_{t2}$);
- Fig. 4 depicts a method of a simultaneous measurement of the partial pressure of oxygen in gas and the sensor temperature.

Mode for Carrying Out the invention

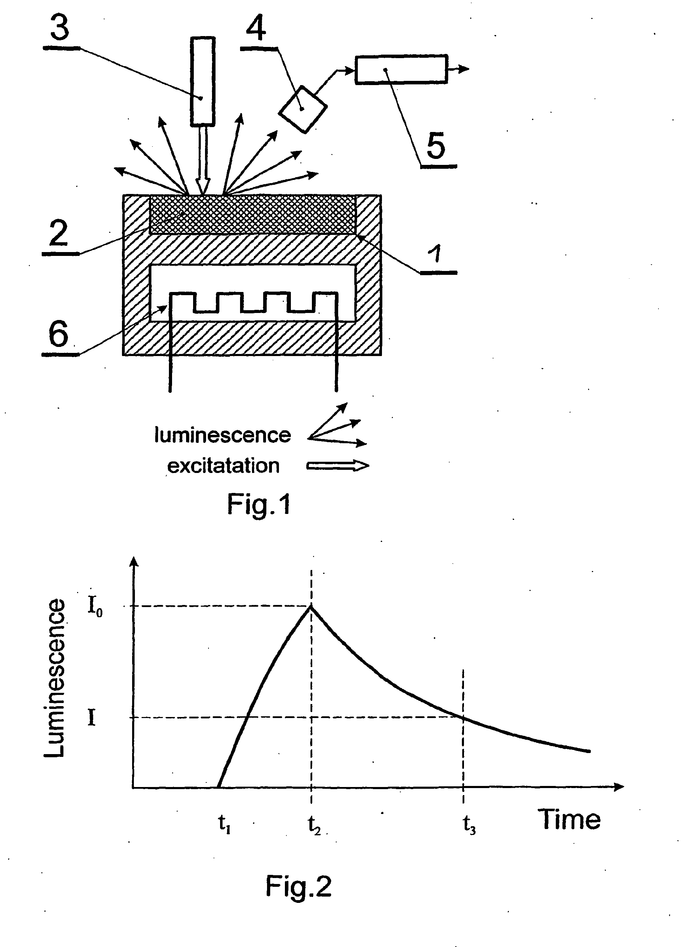

The invention will be described in detail on the basis of the examples of its realization presented below. The exemplary scheme of the system for measuring the partial pressure of oxygen in gas atmosphere and the sensor temperature (Fig. 1), equipped with a heating element 6 that heats up the sensor material 2 placed in the chamber 1 is **characterised in that** the sensor material contains $ZrO_2$ of a monoclinic phase, doped tetragonal phase, regular doped phase or mixture of those phases. The sensor material can work in various temperature ranges depending on the selection of the size of the nanocrystalline grains $ZrO_2$. The sensor is also equipped with an excitation light source 3, photodetector 4 and recorder 5. According to the invention, the light from the pulsing source 3 excites the own luminescence in $ZrO_2$ (2). The luminescent light is being detected by the - photodetector 4, and afterwards the intensity during luminescence decay 5 is registered as a function of time.

The luminescence intensity and the time of its decay provide information about the oxygen partial pressure (in the required temperature $ZrO_2$) and about the temperature itself, respectively. From this point on, the temperature can be determined during every measurement of the luminescence, thereby eliminating the necessity to use an additional device for stabilization and control of the temperature. The possible order of operations and measurements in the time function is presented on Fig. 2. The picture shows the situation after switching on the heating element 6 and current of constant value properly chosen depending on the size of the nanocrystallites $ZrO_2$. After the equal time $t_1$, the resistance heated zirconium dioxide reaches constant temperature proper for the used size of the nanocrystallites $ZrO_2$, an excitation pulse is being sent by the excitation light source 3. The duration time of the excitation pulse is $t_2 - t_1$. The luminescent light is being detected by the photodetector 4 and the intensity as well as the luminescence decay time are being registered by the recorder 5. The luminescence response amplitude $I_0$ presented on the Fig. 2 depends on the oxygen partial pressure in the gas in contact with the sensing material nanocrystalline $ZrO_2$. According to the Fig. 2 the luminescence response reaches its maximum at the end of the excitation pulse $t_2$. The luminescence decay time equal $t_3 - t_2$ can be defined as a time after which the luminescence intensity decreases by the factor 1/e; ($I_0/I = e$, where $\log_e e = 1$). According to the Fig. 2 it is recommended that the excitation time must be shorter than (constant) luminescence decay time ($t_3 - t_2$), the quantity of which is being also determined by the time span between excitations.

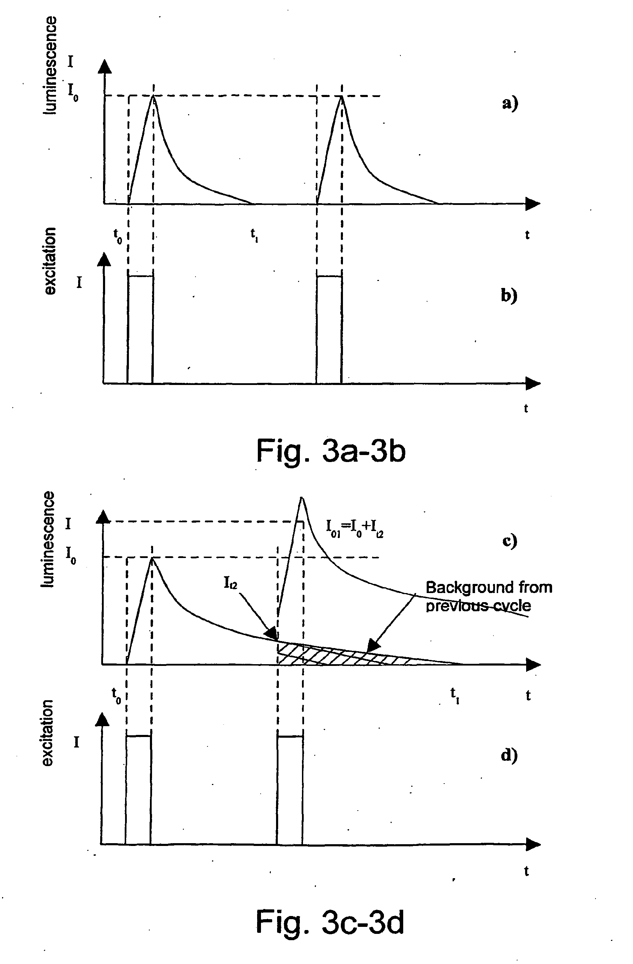

The intensity of the luminescence light $ZrO_2$ is a parameter determining the oxygen partial pressure in the gas, so the accuracy of the oxygen partial pressure measurement depends mainly on the accuracy of its measurement. However beside the excited luminescence there is an additional light that may increase the detection error. This light is composed of: (a) light scattered in the apparatus; (b) background light resulting from the luminescence excited by the previous excitation pulse; and (c) scattered excitation light. The scattered excitation light can be removed for example by the spectral selection with the use of proper filters, while the scattered light in the apparatus (light from the environment of a detector) may be reduced by a proper construction of the detector, so the dominant problem remains the light resulting from the background after the previous luminescence. If the excitation pulses (Fig. 3b) follow each other in time intervals that are long enough, the decay of the luminescence background (Fig. 3a) can be very good. In the time interval $\Delta t = t_1 - t_0$ (Fig. 3b), the luminescence decay time is actually shorter than the boundary value of the photodiode, so the measurement $I_0$ is a good parameter for the oxygen concentration measurements.

The crucial issue is the highest frequency of the excitation. If the subsequent excitation pulse is within the range $t_1 - t_0$ (Fig. 3c and 3d), the photodiode will register the value $I_{01}$, which consists of $I_0$ and a background from the previous excitation causing luminescence $I_{t2}$ (Fig.3c). Therefore, the measurement $I_{01}-I_0+I_{t2}$ is not proper for the determination of the oxygen concentration.

Light produced by the previous excitation light pulse can be neglected if the pulses are separated by more than four relaxation times $4\tau$. It is well known that for an exponential decay of excited luminescence intensity this value characterises the decay time and kinetics.

By the determination of the intensity of the excitation luminescence (own $ZrO_2$) as well as the time of its decay, an comparing these values with the result of calibration, the partial pressure of oxygen and the detector temperature are determined. Of course both of the parameters require calibration.

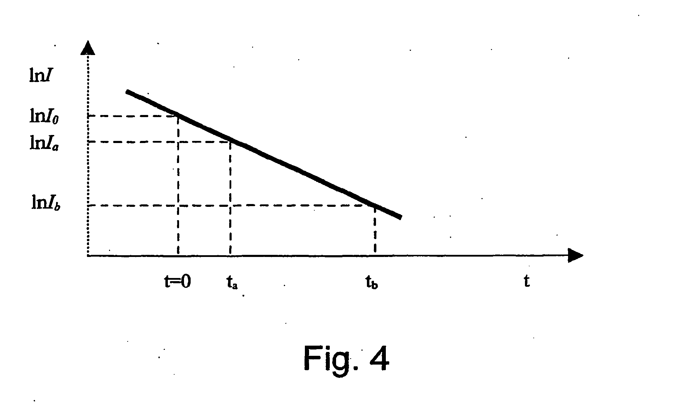

The method according to the invention can also be implemented using a data evaluation method described in Fig. 4. According to the Fig. 4 luminescence intensity measurement was made for two (at least) times after the pulse ($t_a$, $t_b$). In logarithmic coordinates the luminescence intensity as a function of time is a straight line. The intersection point of the line representing light intensity with the line parallel to the axis ln(I) for t=0 determines the exact level $I_0$ which depends on the oxygen amount in the gas around the $ZrO_2$ nanosized powders, and the accurate measurement of the maximum of the luminescence decay is not needed.

It is well known that the thermal energy of the luminescence activation decay ($E_a$) can be determined by comparing luminescence decay rates, i.e. the characteristic relaxation times as a function of temperature:

$$T = \frac{E_a}{K(\ln \tau_0 - \ln \tau)}$$

where: $\tau$ is time constant of the luminescence decay, $1/\tau_0$ is preexponential factor, $E_a$ is thermal activation energy of the luminescence, k is Boltzmann constant and T is temperature (in Kelvins).

Table 1 shows luminescence intensity measurements (measured for the energy 2,65 eV) for $ZrO_2$ (consisting of the mixture of monoclinic and tetragonal phases) in the function of the partial pressure of oxygen in the gas mixture of oxygen and nitrogen surrounding the material and shows the dependence of the luminescence intensity of the zirconium dioxide on the oxygen amount in the surrounding gas mixture. Even such small differences in the partial pressure of oxygen as 0,1% were manifested by the change of the luminescence intensity. The test temperature of the nano $ZrO_2$, oxygen pressure sensor consisting of monoclinic phase with average grain size 24 nm and of tetragonal phase with average grain size 19 nm was 340°C

Table 1

| Partial pressure of oxygen [%] | Luminescence intensity |
|---|---|
| 9,7 | 19055 |
| 9,8 | 17800 |
| 21,7 | 14799 |

The advantage of the luminescent oxygen sensor is a clear algorithm and relatively simple measurement data handling as well as the possibility of a simultaneous measurement of the oxygen amount in an analysed gas and the temperature of the detector.

In case of the luminescent detector made of $ZrO_2$ of a tetragonal phase, due to the low electric conduction, the heating element may be placed directly on $ZrO_2$ for instance by the method of the.thin film evaporation.

Example 1

A sensor 2 containing nanocrystalline zirconium dioxide, consisting of a stabilized tetragonal phase with an average size of crystallines 80 nm has been prepared, its calibration has been conducted, during which one has determined the thermal energy activation of the luminescence decay ($E_a$), parameter $\tau_0$, range of its work temperature, dependence of the luminescence intensity in the function of the oxygen pressure in this temperature range as well as the time of the luminescence decay in the temperature function, and then it has been placed in the sensor element containing metal chamber 1 and heated up to the temperature of 450°C and the car exhaust fumes have been let in. Next, in time $t_0$, the surface of the sensor contacting the measured gas has been illuminated by the inducing UV light pulse with LED 3 (280nm), which excited the own luminescence in $ZrO_2$ in the band 2.7 eV, which then was detected by the photodiode 4 (FDS 100) having signal rise - time 10ns. The signal from the photodiode 4 was intensified by a wide-band amplifier, not presented on the drawing, of a band-width 440 MHz and the intensity (I) as well as luminescence decay time ($t_3$-$t_2$, Fig. 2) registered by a fast operating eight-bit analog-to-digital converter 5 and after the conversion sent to the data displaying module. The measurements of the above parameters were made in such a way, that after reaching maximum by the luminescence, two additional measurements of the luminescence intensity were made: $I_a$ for time $t_a$ and $I_b$ for time $t_b$, next the luminescence decay time was determined (T) as a difference quotient of the said measurement times ($t_b$-$t_a$) and the difference of the natural logarithms calculated during those luminescence intensity times ($\ln I_a$ - $\ln I_b$) and in addition, one calculated the luminescence amplitude excited either for maxima by drawing through the two above-mentioned points a straight line, which intersection point with the line parallel to the axis lnl crossing the point to (LED flash point) determined the exact $I_0$ level, which is dependent on the initial oxygen amount in $ZrO_2$, either for other fixed level (e.g. half-height or other in accordance with calibration table formation requests).This value was compared with the value in the calibration table I=f (oxygen pressure) in the given temperature and the partial pressure of oxygen was obtained. The sensor temperature was determined as a quotient of the thermal energy of the luminescence activation decay ($E_a$) by the product of the Boltzmann constant (k) and the difference of the natural algorithm of the calibration parameter $\tau_0$ and the natural logarithm of the luminescence decay time determined earlier ($\tau$). Another excitation pulses were switched on after the time equal to the sum of the excitation pulses ending times ($t_2$) and the quadruple of the luminescence time decay ($t_3$-$t_2$).

Example 2

A measuring sensor 2 containing nanocrystalline zirconium dioxide, consisting of a stabilized tetragonal phase with an average size of crystalline 15nm has been prepared, its calibration has been conducted, during which one has determined the thermal energy activation of the luminescence decay ($E_a$), parameter $\tau_0$, range of its work temperature, dependence of the luminescence intensity in the function of the oxygen pressure in this temperature range as well as the time of the luminescence decay in the temperature function, and then it has been placed in the sensor element containing metal chamber 1 and heated up to the temperature of 200°C and the analysed gas (mixture of nitrogen and oxygen) has been let in. Next in time $t_0$, the surface of the sensor contacting the measured gas has been illuminated by the inducing UV light pulse with LED 3 (280nm), which excited the own luminescence in $ZrO_2$ in the band 2.7 eV, which the was detected by the photodiode 4 (FDS 100) of the growth time 20ns. The signal from the photodiode 4 was intensified by a wide-band amplifier, not presented on the picture, of a 440 MHz band-width and the intensity (I) as well as luminescence decay time ($t_3$-$t_2$) (Fig. 2) registered by a fast operating eight-bit analog-to-digital converter 5 and after the conversion sent to the data displaying module. The measurement of the above parameters were made in such a way, that after reaching maximum by the luminescence, two additional measurements of the luminescence intensity were made: $I_a$ for time $t_a$ and $I_b$ for time $t_b$, next the luminescence decay time was determined (T) as a difference quotient of the said measurement times ($t_b$-$t_a$) and the difference of the natural logarithms calculated during those luminescence intensity times ($\ln I_a$ - $\ln I_b$) and in addition, one calculated the luminescence amplitude excited by drawing through the two above-mentioned points a straight line, which intersection point with the line parallel to the axis lnl crossing the point to (LED flash point) determined the exact $I_0$ level (or other fixed value in accordance with calibration table formation), which is dependent on the initial oxygen amount in $ZrO_2$. This value was compared with the value in the calibration table I=f (oxygen pressure) in the given temperature and the partial pressure of oxygen was obtained. The sensor temperature was determined as a quotient of the thermal energy of the luminescence activation decay ($E_a$) by the product of the Boltzmann constant (k) and the difference of the natural algorithm of the calibration parameter $\tau_0$ and the natural algorithm of the luminescence decay time determined earlier ($\tau$).

Another excitation pulses were switched on after the time equal to the sum of the excitation pulses ending times ($t_2$) and the quadruple of the luminescence time decay ($t_3$-$t_2$).

The sensitivity of the sensor, according to the invention, is below 1%, and the response time 100$\mu$s. According to the invention, a method can be used for monitoring the partial pressure of oxygen in the analysed gas in the measuring range from 1% to 27%.

Obviously, the described above and shown on drawings embodiments of the present invention are only examples and it will be understood that this does not exhaust the scope of the present invention as defined by the following claims.

**Claims**

1. Method of measuring partial pressure of oxygen in gases by exciting luminescence of a calibrated sensor, **characterised in that** nanocrystalline zirconium dioxide in the calibrated sensor is brought into contact with a gas to be measured and is illuminated by a UV-VIS light pulse which induces luminescence of the zirconium dioxide, then the luminescence intensity is registered as a function of time, the luminescence intensity of the registered luminescence pulse is determined and compared with the calibration results of the luminescence intensity as a function of the oxygen partial pressure for the sensor temperature measured at a given time.

2. The method according to Claim 1, **characterised in that** the determined luminescence intensity equals the maximum of the luminescence response pulse.

3. The method, according to Claim 1 or 2, **characterised in that** the sensor contains nanocrystalline zirconium dioxide with crystallites from 3 nm to 200 nm made of monoclinic phase, doped tetragonal phase, regular doped phase or a mixture of those phases.

4. The method according to Claim 3, **characterised in that** the zirconia contains ions known to stabilise the monoclinic, tetragonal or regular phases or their mixtures.

5. The method according to Claims 3 or 4 **characterised in that** the zircona contains ions of rare and transition metals, which improve the sensitivity of the sensor and decrease the operating temperature.

6. The method according to one of Claims 1 to 3, **characterised in that** when the temperature of the measured gas is below 100°C, the sensor is heated to a temperature in the range of 100°C to 900°C and the sensor working temperature is proportional to the size of the nanocrystalline grains.

7. The method according to one of Claims 1 to 6, **characterised in that** the wavelength of the inducing excitation light impulse is within the range from 210 nm to 620 nm.

8. The method according to one of Claims 1 to 7, **characterised in that** the measuring of the sensor temperature at a given time is made on the basis of the exponent of the exponential function describing the luminescence decay as well as comparing the obtained value with the calibration results determining the connection between the temperature and this exponent.

9. The method according to one of Claims 1 to 7, **characterised in that** the measuring of the sensor temperature at a given time is made on the basis of the rate of decay of luminescence, which is characteristic for the given material used in the sensor.

10. The method according to Claim 1, **characterised in that** the determined luminescence intensity equals any fixed level of luminescence response pulse which is lower than maximum level.

11. The method, according to Claim 10, **characterised in that** the sensor contains nanocrystalline zirconium dioxide with crystallites from 3nm to 200nm made of doped monoclinic phase, tetragonal phase, regular phase or a mixture of those phases.

12. The method according to Claims 10 or 11, **characterised in that** when the temperature of the measured gas is below 100°C, the sensor is heated to a temperature in the range of 100°C to 900°C and the sensor working temperature is proportional to the size of the nanocrystalline grains.

13. The method according to one of Claims 10 to 12, **characterised in that** the wavelength of the inducing excitation light pulse is within the range from 210 nm to 620. nm.

14. The method according to one of Claims 10 to 13, **characterised in that** the measuring of the sensor temperature at a given time is made on the basis of the exponent of the exponential function describing the luminescence decay as well as comparing the obtained value with the calibration results determining the connection between the temperature and this exponent.

**Patentansprüche**

1. Die Methode der Messung vom Partialdruck des Sauerstoffs im Gas durch die Anregungslumineszenz des kalibrierten Sensors, **dadurch gekennzeichnet, dass** das nanokristalline Zirkoniumdioxid in Kontakt mit dem gemessenen Gas steht und sich mit einem UV-VIS-Leuchtimpuls beleuchtet, der die Lumineszenz des Zirkoniumdioxids verursacht und dann die Intensität der Lumineszenz als Zeitfunktion wird registriert, die Intensität des registrierten Lumineszenzimpulses wird bestimmt und wird mit den Ergebnissen der Kalibrierung der Intensität als Funktion des Partialdruckes des Sauerstoffs für die Temperatur des Sensors vergleicht, die in bestimmter Zeit gemessen wird.

2. Die Methode nach dem Anspruch 1, **dadurch gekennzeichnet, dass** die bestimmte Intensität der Lumineszenz dem maximallen Impuls der Anregungslumineszenz gleicht.

3. Die Methode nach dem Anspruch 1 oder 2, **dadurch gekennzeichnet, dass** der Sensor das nanokristalline Zirkoniumdioxid mit Kristallitengröße von 3 Nanometer bis 200 Nanometer beinhaltet, die aus der Monoklinphase, dotierten Tetragonalphase, dotierten tetragonalen regulären Phase oder Mischung dieser Phasen gefertigt werden.

4. Die Methode nach dem Anspruch 3, **dadurch gekennzeichnet, dass** das Zirkonium die bekannten Ionen beinhaltet, die die Monoklinphasen, tetragonalen oder regulären Phasen oder ihre Mischungen stabilisieren.

5. Die Methode nach dem Anspruch 3 oder 4, **dadurch gekennzeichnet, dass** das Zirkonium die Ionen der seltenen und Übergangsmetalle beinhaltet, die die Empfindlichkeit des Sensors verbessern und die Betriebstemperatur verringern.

6. Die Methode nach einem der Anspruch von 1 bis 3, **dadurch gekennzeichnet, dass** wenn die Temperatur des gemessenen Gases unter 100°C steht, erhitzt der Sensors wird erhitzt zu einer Temperatur im Bereich von 100°C bis 900°C und die Sensor-Arbeitstemperatur ist zur Größe der nanokristallinen Körner proportional.

7. Die Methode nach einem der Anspruch von 1 bis 6, **dadurch gekennzeichnet, dass** sich die Wellenlänge des anregenden Lichtimpulses im Bereich von 210 Nanometer bis 620 Nanometer befindet.

8. Die Methode nach einem der Anspruch von 1 bis 7, **dadurch gekennzeichnet, dass** sich die Temperaturmessung des Sensors in bestimmter Zeit auf Grund des Exponenten der Exponentialfunktion vollzieht, die den Schwund der Lumineszenz und den Vergleich des erhaltenen Wertes mit den Kalibrierungsergebnissen, die das Verhältnis zwischen der Temperatur und diesem Exponenten bestimmen, beschreibt.

9. Die Methode nach einem der Anspruch von 1 bis 7, **dadurch gekennzeichnet, dass** sich die Temperaturmessung des Sensors in bestimmter Zeit auf Grund der Rate des Schwundes der Lumineszenz vollzieht, charakteristisch für das bestimmte im Sensor eingesetzte Material.

10. Die Methode nach dem Anspruch 1, **dadurch gekennzeichnet, dass** die bestimmte Lumineszenz-Intensität dem festgelegten Niveau des Impulses der Anregungslumineszenz, der niedriger als das Maximalniveau ist, gleicht.

11. Die Methode nach dem Anspruch 10, **dadurch gekennzeichnet, dass** der Sensor das nanokristalline Zirkoniumdioxid mit Kristalliten von 3 Nanometer zu 200 Nanometer beinhaltet, die aus der Monoklinphase, dotierten Tetragonalphase, dotierten tetragonalen regulären Phase oder Mischung von diesen Phasen gefertigt werden.

12. Die Methode nach dem Anspruch 10 oder 11, **dadurch gekennzeichnet, dass** wenn die Temperatur des gemessenen Gases unter 100°C steht, wird der Sensor zu einer Temperatur im Bereich von 100°C zu 900°C erhitzt und die Sensor-Arbeitstemperatur ist zur Größe der nanokristallinen Körner proportional.

13. Die Methode nach einem der Anspruch von 10 bis 12, **dadurch gekennzeichnet, dass** sich die Wellenlänge des anregenden Lichtimpulses im Bereich von 210 Nanometer bis 620 Nanometer befindet.

14. Die Methode nach einem der Anspruch von 10 bis 13, **gekennzeichnet dadurch, dass** sich die Messung des Sensortemperatur in bestimmter Zeit auf Grund des Exponenten der Exponentialfunktion vollzieht, die den Schwund der Lumineszenz und den Vergleich des erhaltenen Wertes mit den Kalibrierungsergebnissen, das Verhältnis zwischen der Temperatur und diesem Exponenten bestimmen, beschreibt.

**Revendications**

1. Procédé de mesure de la pression partielle de l'oxygène dans un gaz par induction de luminescence d'un capteur calibré, **caractérisé en ce que** le dioxyde de zirconium nanocristallin dans le capteur calibré entre en contact avec le gaz qui est à mesurer et est illuminé par impulsion lumineuse UV-VIS qui induit la luminescence du dioxyde de zirconium, ensuite l'intensité de luminescence est enregistrée en tant que fonction du temps, l'intensité de luminescence de l'impulsion enregistrée de luminescence est déterminée et comparée aux résultats de la calibration de l'intensité de luminescence en tant que fonction de la pression partielle de l'oxygène pour la température du capteur, mesurée à un moment donné.

2. Procédé selon la Revendication 1, **caractérisé en ce que** l'intensité de luminescence déterminée est égale au maximum de l'impulsion d'induction de la luminescence.

3. Procédé selon la Revendication 1 ou 2, **caractérisé en ce que** le capteur contient du dioxyde de zirconium nanocristallin avec des cristallites de 3nm à 200 nm, de phase monoclinique, de phase tétragonale dopée, de phase régulière dopée ou d'un mélange de ces phases.

4. Procédé selon la Revendication 3, **caractérisé en ce que** la zircone contient des ions connus, stabilisant les phases monocliniques, tétragonales ou régulières, ou leurs mélanges.

5. Procédé selon les Revendications 3 ou 4, **caractérisé en ce que** la zircone contient des ions de métaux rares ou de transition qui améliorent la sensibilité du capteur et réduisent la température d'exploitation.

6. Procédé selon l'une des Revendications de 1 à 3, **caractérisé en ce que** lorsque la température du gaz mesuré est inférieure à 100°C, le capteur est chauffé à une température de la plage de 100°C à 900°C et la température d'exploitation du capteur est proportionnelle à la dimension des grains nanocristallins.

7. Procédé selon l'une des Revendications de 1 à 6, **caractérisé en ce que** la longueur d'onde de l'impulsion lumineuse d'induction est comprise entre 210 nm et 620 nm.

8. Procédé selon l'une des Revendications de 1 à 7, **caractérisé en ce que** la mesure de température du capteur au moment donné est réalisée sur la base de l'exposant de la fonction exponentielle décrivant l'extinction de la luminescence et par comparaison de la valeur obtenue aux résultats de calibration déterminant le rapport entre la température et cet exposant.

9. Procédé selon l'une des Revendications de 1 à 7, **caractérisé en ce que** la mesure de température du capteur au moment donné est réalisée sur la base de la cadence d'extinction de la luminescence, caractérisant le matériau utilisé dans le capteur.

10. Procédé selon la Revendication 1, **caractérisé en ce que** l'intensité de luminescence déterminée est égale à un niveau donné quelconque de l'impulsion d'induction, inférieur au niveau maximum.

11. Procédé selon la Revendication 10, **caractérisé en ce que** le capteur contient du dioxyde de zirconium nanocristallin avec des cristallites de 3nm à 200 nm, de phase monoclinique, de phase tétragonale dopée, de phase régulière dopée ou d'un mélange de ces phases.

12. Procédé selon les Revendications 10 ou 11, **caractérisé en ce que** lorsque la température du gaz mesuré est inférieure à 100°C, le capteur est chauffé à une température de la plage de 100°C à 900°C et la température d'exploitation du capteur est proportionnelle à la dimension des grains nanocristallins.

13. Procédé selon l'une des Revendications de 10 à 12, **caractérisé en ce que** la longueur d'onde de l'impulsion lumineuse d'induction est comprise entre 210 nm et 620 nm.

14. Procédé selon l'une des Revendications de 10 à 13, **caractérisé en ce que** la mesure de température du capteur au moment donné est réalisée sur la base de l'exposant de la fonction exponentielle décrivant l'extinction de la luminescence et par comparaison de la valeur obtenue aux résultats de calibration déterminant le rapport entre la température et cet exposant.

luminescence

excitatation

Fig.1

Fig.2

Fig. 3a-3b

Fig. 3c-3d

Fig. 4

## REFERENCES CITED IN THE DESCRIPTION

### Patent documents cited in the description

- US 6815211 B
- WO 03047027 A

- US 20010031224 A1

### Non-patent literature cited in the description

- **C.J. Murphy.** Optical Sensing with Quantum Dots. *Analytical Chemistry,* 2002, vol. 75 (19), 520A-525A

- **De la Rosa-Cruz E et al.** Luminescent properties and energy transfer in ZrO2:Sm3+ nanocrystals. *Journal of Applied Physics,* 2003, vol. 94 (5), 3509-3515